Europäisches Patentamt

European Patent Office

Office européen des brevets

(19)

(11) Publication number: **0 265 160 B1**

# EUROPEAN PATENT SPECIFICATION

(12)

(45) Date of publication of patent specification: **20.05.92**  (51) Int. Cl.5: **G06K 15/00**, B41J 19/14

(21) Application number: **87309062.5**

(22) Date of filing: **14.10.87**

(54) **Printer having increased speed for printing graphics characters including blank characters.**

(30) Priority: **14.10.86 US 918414**

(43) Date of publication of application:
**27.04.88 Bulletin 88/17**

(45) Publication of the grant of the patent:
**20.05.92 Bulletin 92/21**

(84) Designated Contracting States:
**DE FR GB IT**

(56) References cited:
**EP-A- 0 025 893**
**EP-A- 0 068 122**
**US-A- 3 764 994**

**IBM TECHNICAL DISCLOSURE BULLETIN, vol. 29, no. 5, October 1986, page 2311, New York, US; "Printer having automatic horizontal positioning on carrier return and similar horizontal movement commands"**

**PATENT ABSTRACTS OF JAPAN, vol. 8, no. 219 (P-306)[1656], 5th October 1984; & JP-A-59 100 950 (FUJITSU K.K.) 11-06-1984**

**PATENT ABSTRACTS OF JAPAN, vol. 7, no. 215 (M-244)[1360], 22nd September 1983; &**

**JP-A-58 110 280 (FUJITSU K.K.) 30-06-1983**

(73) Proprietor: **International Business Machines Corporation**
**Old Orchard Road**
**Armonk, N.Y. 10504(US)**

(72) Inventor: **Malcolm, Jerry Walter**
**12040 Lincolnshire**
**Austin Texas 78758(US)**

(74) Representative: **Atchley, Martin John Waldegrave**
**IBM United Kingdom Limited Intellectual Property Department Hursley Park**
**Winchester Hampshire SO21 2JN(GB)**

EP 0 265 160 B1

**Description**

This invention relates generally to a printer of the type capable of printing both text characters and graphics characters.

In the prior art there are printers which scan a text data stream for the data code representing the first printable character on a line to be printed. The line to be printed is the current line. When the code representing this first printable character is found, the printer print head is caused to be moved directly from the print position of the last printable character position on the preceding line to the print position of the first printable character on the current line. This movement is without first homing the print head at the position corresponding to the beginning of the line. Code representing blank spaces is in effect ignored. US-A-3,764,994, the IBM Proprinter, and the IBM Personal Computer Graphics Printer (IBM is a Registered Trade Mark of International Business Machines Corporation) are illustrative of the prior art. However, with prior art printers such as the IBM Personal Computer Graphics Printer and the IBM Proprinter, there are no means for distinguishing between nulls (representing blank graphics characters) and code representing printable graphics characters data in a graphics data stream for the purpose of controlling the position of the print head. Nulls can be for blank graphics characters which may be equivalent to an indent tab on a line preceding printable graphics characters. When nulls exist in the data stream, the print head, after completing the printing of a line, is caused to move to the position corresponding to the first null in the next line, which is usually adjacent the left margin.

Spaces have been used for padding in the past. In US-A-3,744,033, tab codes are replaced with spaces for display formatting. However, formatting is not an issue with the instant invention, and the concerns with printing are different from the concerns with displaying.

The present invention relates to a printer for printing text and graphics characters which has an increased printing speed when printing blank graphics characters.

The present invention relates to a printer of the type comprising means for receiving sets of print data each representing a line of text and/or graphics characters to be printed on a print medium, a print head for performing print operations on the print medium in accordance with the sets of print data so as to print each character in a required position, and means for moving the print head relative to the print medium, and a control system including means for detecting, at the beginning of each set of print data, codes representing text spaces, text characters and graphics characters and their respective required positions and for ignoring the codes representing the text spaces and for moving the print head directly into the correct position for printing the text or graphics characters corresponding to the first of the character position codes.

According to the invention the printer is characterised in that the control system also includes means for detecting, in each set of print data, codes representing blank graphics characters and their respective required positions and converts the codes representing blank graphics characters into codes representing text spaces, whereby the control system ignores the codes representing the blank graphics characters in positioning the print head for printing the graphics characters.

The invention provides an advance over the prior art in that a graphics data stream following a carriage return code and containing preceding nulls is converted or modified in order to be handled in the same manner as a text data stream. This modification includes replacing codes for preceding graphics nulls with coding for text spaces. Codes for text spaces are recognised by the control system to cause the print head to be moved directly to a position for printing the first printable character after the graphics nulls. The advantage of this arrangement is that throughput is significantly increased. This increase is due to the print head not having to be first homed or moved to the left margin and then escaped past the graphics nulls position to the first print position.

In order that the invention may be more readily understood, an embodiment will now be described with reference to the accompanying drawings, in which:

Fig. 1 is a block diagram illustration of the pertinent portions of a prior art printer including part of the control system,

Fig. 2 is an illustration of the line buffer in the printer of Figure 1 containing a text data stream,

Fig. 3 is an illustration of the line buffer in the printer of Figure 1 containing a graphics data stream including code representing preceding nulls (blank graphics characters),

Fig. 4 is a block diagram illustration of an addition to the control system of the printer of Figure 1 used for modifying the graphics data stream in accordance with the invention, and

Fig. 5 is a flow chart illustrating the operations performed by the addition illustrated in Figure 4 in or modifying the graphics data stream.

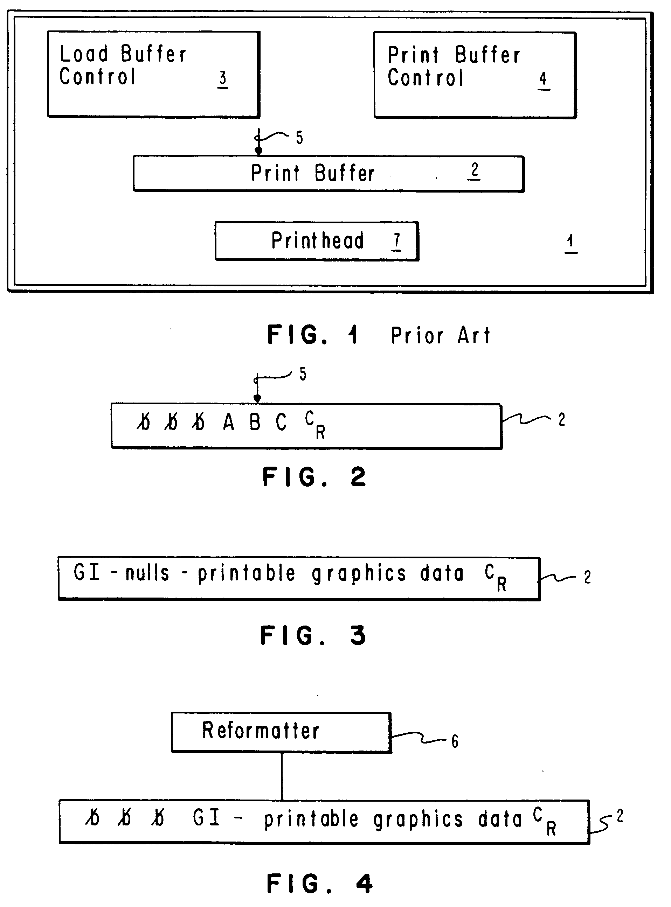

With both the IBM Proprinter and the IBM Personal Computer Graphics Printer, which are matrix printers, text print data stream printing is efficiently managed. Codes in the stream of text print data representing text spaces preceding and following a line of printable text are in effect ignored for purposes of print head positioning. This is not the case however for graphics print data streams. For a better understanding of this, reference is first made to Fig. 1.

In Fig. 1, a printer 1 is illustrated diagrammatically. This printer generally forms part of a standalone, or host-connected, keyboard/display, or device controlled display, computer workstation or system. Printer 1 is made up of a print buffer 2, a load buffer control 3 for writing a set of print data representing a line of text characters or graphics characters into the print buffer 2, and a print buffer control 4 for controlling a print head 7 included in printer 1 for printing characters in lines on a print medium. The print data written into buffer 2 can be from main memory etc. included in the workstation. As the illustrated set of print data is written into buffer 2, a pointer 5 is advanced. When a carrier return (C/R) code is written into buffer 2, control 4 takes control of buffer 2 and reads out the print data from buffer 2 causing printing of the characters represented by the print data. When read out from the buffer 2 has progressed up to the C/R code, control 3 again takes control of buffer 2.

Refer next to Fig. 2. Assume that the set of print data in buffer 2 is text data and contains codes ƀ representing text spaces preceding codes (A, B, C) representing text characters as shown. When the code C/R is received by control 3, control of the buffer 2 is passed to control 4 for the purpose of printing the contents of buffer 2. Control 4 ignores the codes representing the leading text spaces for purposes of moving the print head to print the data. The print head is moved so as to be correctly positioned for printing the first text character "A". This print head movement is from the position of the last text character to be printed on the preceding line. When the character "C" has been printed, the print head will stop and wait for the next set of print data, representing the text characters to be printed on the next line, to be loaded into buffer 2. Upon the writing of the C/R code for this next line into buffer 2, the print head will be moved directly into the correct position for printing the first character represented in the set of print data.

Refer next to Fig. 3. If the print data is graphics data representing graphics characters, a graphics identifier (GI) code will precede the graphics character codes. Following code GI, there are illustrated graphics nulls. The nulls are columns of all zeroes and represent blank graphics characters, and as such require no actual printing is to take place. Following the nulls is printable graphics data, i.e. codes representing printable graphic characters.

With a matrix printer, the print head can be made up of a vertical column of a plurality of print wires or pins. When one of the wires is activated or fired, a dot will appear on the print medium being printed. With the printers mentioned herein, graphics printing is performed by moving the print head always from left to right, while text printing is performed by bi-directional movement of the print head. For graphics, the print head will be first positioned at the left margin (homed). Thereafter, blank characters represented by the nulls will be printed followed by the characters represented by the printable graphics data. In actuality, while reference is made to the blank characters represented by the nulls being printed, no actual printing takes place. The print head just moves or escapes across the corresponding printing positions on the print medium. The time required for the homing and print head movement over the printing positions at which no printing takes place is wasted.

In order to eliminate this wasted time, a reformatter 6 as illustrated in Fig. 4 is provided to convert the code representing the preceding nulls into codes (ƀ, ƀ, ƀ) representing text spaces as shown. The codes representing the text spaces are recognised by control 4 to control movement of the print head directly to the print position following the print positions corresponding to the text spaces rather than moving the head to the left margin first (home).

Set out below is an illustration of a routine or application program usable by a computer system to intercept and reformat a graphics data stream according to this invention. This routine is in programming design language from which both source and machine code are derivable.

```
       IF MOST RECENT CHARACTER PRINTED WAS CARRIAGE RETURN

              THEN DO

         SCAN THE BUFFER FROM THE FIRST DATA BYTE FOR

               THE FIRST BYTE THAT IS NOT EQUAL TO ZERO

         VARIABLE 'NULS' = (NUMBER OF LEADING NULL BYTES)

         DETERMINE THE CURRENT PITCH

         VARIABLE 'CHAR_WIDTH' = (THE NUMBER OF GRAPHICS

               BYTES REQUIRED FOR ONE CHARACTER

               POSITION FOR THE CURRENT PITCH)

         VARIABLE 'LEAD_SPACES' = (NULS) / (CHAR_WIDTH)

         PRINT 'LEAD_SPACES' COUNT OF TEXT SPACES

         VARIABLE 'NULS_USED' = (LEAD_SPACES) *

               (CHAR_WIDTH)

         SET BEGINNING POINTER TO GRAPHICS DATA AT

               (ORIGINAL POSITION) + (NULS_USED)

         SET GRAPHICS DATA COUNT = (ORIGINAL COUNT) -

               (NULS_USED)

       ENDIF

       PRINT THE BUFFER
```

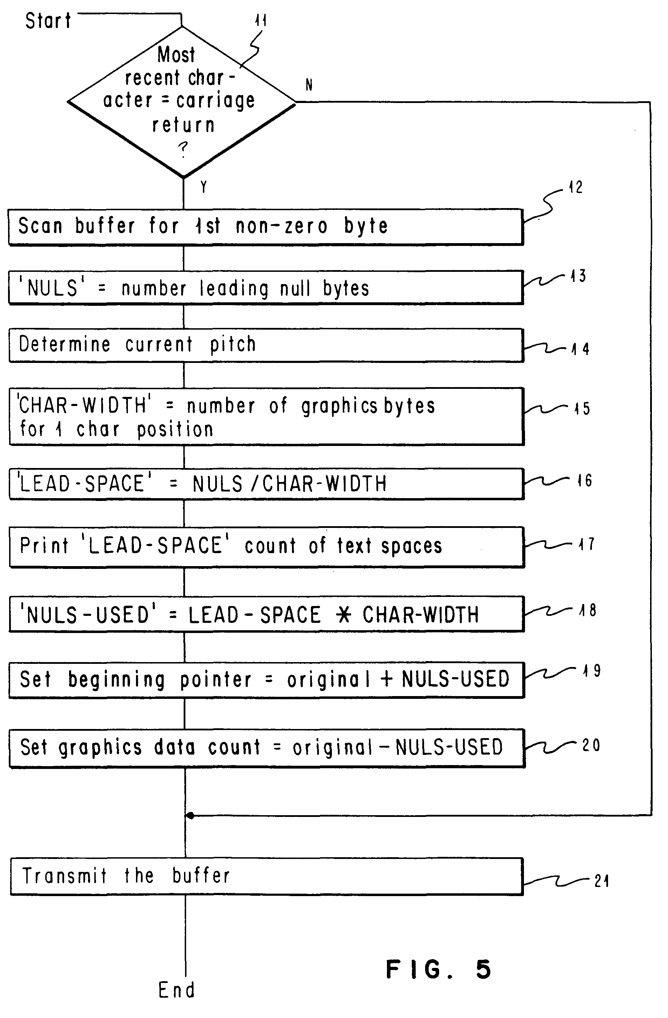

Refer next to the flow chart in Fig. 5 in conjunction with the above programming design language routine. Defined are the operations performed by the reformatter to cause the below described conversion and print buffer loading to occur.

The reformatter 6 determines whether the most recent character printed or code executed (function executed) was a carriage return (C/R). If the most recent character printed or code executed was not a carrier return code as indicated by block 11, then the next code in the buffer is printed without change as indicated by block 21.

If the buffer 2 contains graphics data following a carrier return code, then the next step is to scan the graphics data stream from the first byte, counting bytes, until the first non-zero (non-null) byte is encountered. This is indicated in block 12.

In block 13, the variable 'NULS' will be used to reference the number of leading bytes that are equal to zero.

The number of graphics nulls required to equal the width of one text space position on the medium being printed is based upon the current pitch of the printer. Pitch is related to the number of characters per inch. For example, if the printer is currently set to operate at 10 pitch printing, then 12 graphics nulls are equivalent in width to one text space. If the printer is currently set to 5 pitch, then 24 graphics nulls are equivalent in width to one text space. As shown in block 14, the reformatter 6 determines the current pitch for the printer. The variable 'CHAR_WIDTH' will be used to reference the number of graphics nulls per text space character position as shown in block 15.

A mathematical calculation is performed to determine the number of text spaces that will be used to replace the graphics nulls. As shown in block 16, the variable 'NULS' is divided by the variable 'CHAR_WIDTH'. The variable 'LEAD_SPACES' will be used to reference the quotient. This variable represents the number of character positions that will fit in the space taken up by the leading graphics nulls.

4

The reformatter then sends 'LEAD__SPACES' count of text spaces to the printer as indicated in block 17.

Since the number of nulls replaced must be a multiple of CHAR_WIDTH, the reformatter must determine how many leading null bytes to remove from the buffer. This value will differ from the total count of leading nulls by the remainder from the division calculation performed in block 16. Multiply 'LEAD__SPACES' by 'CHAR_WIDTH'. The variable 'NULS_USED' represents the exact number of preceding graphics nulls that have been replaced by the text spaces. This is indicated in block 18.

Next, the reformatter 6 must adjust a beginning buffer pointer to the original position " + NULS__USED", and set the graphics data count to the original "- NULS__USED" as indicated by blocks 19 and 20.

Finally, control 4 causes a printing from the buffer as indicated in block 21.

In summary, a unique method of modifying a graphics data stream is provided in order to improve printer throughput. The data stream is modified in that codes representing nulls preceding codes representing printable data are replaced with codes representing text spaces. Text spaces are recognised for causing the printer to perform as though it were printing a text data stream.

## Claims

**1.** A printer comprising

means (2) for receiving sets of print data each representing a line of text and/or graphics characters to be printed on a print medium,

a print head (7) for performing print operations on said print medium in accordance with said sets of print data so as to print each character in a required position,

means for moving said print head relative to said print medium, and

a control system (4) includes means for detecting, at the beginning of each set of print data, codes ( ƀ) representing text spaces, text characters and graphics characters and their respective required positions and for ignoring said codes representing said text spaces and for moving said print head directly into the correct position for printing the text or graphics characters corresponding to the first of the character position codes,

characterised in that

said control system (4) also includes means (6) for detecting, in each set of print data, codes representing blank graphics characters and their respective required positions and converts said blank graphics characters codes into codes ( ƀ) representing text spaces,

whereby said control system ignores said codes representing said blank graphics characters in positioning said print head for printing said graphics characters.

## Revendications

**1.** Imprimante comprenant :

des moyens (2) de réception d'ensembles de données d'impression représentant chacun une ligne de texte et/ou de caractères graphiques à imprimer sur un support d'impression,

une tête d'impression (7) pour exécuter des opérations d'impression sur ledit support d'impression conformément auxdits ensembles de données d'impression, de façon à imprimer chaque caractère à une position voulue,

des moyens de déplacement de ladite tête d'impression par rapport audit support d'impression, et

un système de commande (4) comportant des moyens pour la détection, au début de chaque ensemble de données d'impression, de codes ( ƀ) représentant des espaces de texte, des caractères de texte et des caractères graphiques et leurs positions requises respectives, et pour ignorer lesdits codes représentant lesdits espaces de texte, et pour amener ladite tête d'impression directement à la position correcte afin d'imprimer les caractères de texte ou les caractères graphiques correspondant au premier des codes de position de caractère,

caractérisée en ce que

ledit système de commande (4) comprend également des moyens (6) pour détecter, dans chaque ensemble de données d'impression, des codes représentant des caractères graphiques en blanc et leurs positions requises respectives, et pour convertir lesdits codes de caractères graphiques en blanc en codes ( ƀ) représentant des espaces de texte,

de sorte que ledit système de commande ignore lesdits codes représentant lesdits caractères graphiques en blanc dans le positionnement de ladite tête d'impression pour l'impression desdits caractères graphiques.

**Patentansprüche**

1. Drucker, der folgendes aufweist:
Mittel (2), um Sätze von Druckdaten zu empfangen, wobei jeder eine Zeile eines Textes und/oder von Graphikzeichen repräsentiert, die auf einem Druckmedium gedruckt werden sollen,
einen Druckkopf (7), um Druckarbeitsgänge auf dem Druckmedium entsprechend den Sätzen von Druckdaten so durchzuführen, daß jedes Zeichen in einer gewünschten Position gedruckt wird,
Mittel, um den Druckkopf bezüglich des Druckmediums zu bewegen und
ein Steuersystem (4), das Mittel aufweist, um an dem Anfang jedes Satzes von Druckdaten Codes ( ʰ) zu erfassen, die Textzwischenräume, Textzeichen und Graphikzeichen und ihre entsprechenden geforderten Positionen repräsentieren und um die Codes zu ignorieren, welche die Textzwischenräume repräsentieren und um den Druckkopf unmittelbar in die richtige Position zum Druckn der Text- oder Graphikzeichen zu bewegen, welche dem ersten der Zeichenpositionscodes entsprechen,
dadurch gekennzeichent, daß
das Steuersystem (4) auch Mittel (6) aufweist, um in jedem Satz von Druckdaten Codes zu erfassen, die Graphik-Leerzeichen und ihre entsprechenden, geforderten Positionen repräsentieren und die Codes für Grapik-Leerzeichen in Codes ( ʰ) umwandelt, die Textzwischenräume repräsentieren,
wodurch das Steuersystem bei dem Einstellen des Druckkopfs zum Drucken der Graphikzeichen die Codes ignoriert, welche die Graphik-Leerzeichen repräsentieren.

| Load Buffer Control _3_ | | Print Buffer Control _4_ |
|---|---|---|

5

| Print Buffer . _2_ |
|---|

| Printhead _7_ | _1_ |
|---|---|

**FIG. 1**  Prior Art

5

| B̸ B̸ B̸ A B C $C_R$ | 2 |
|---|---|

**FIG. 2**

| GI - nulls - printable graphics data $C_R$ | 2 |
|---|---|

**FIG. 3**

| Reformatter | 6 |
|---|---|

| B̸ B̸ B̸ GI - printable graphics data $C_R$ | 2 |
|---|---|

**FIG. 4**

Start

Most recent character = carriage return ? — 11

N

Y

Scan buffer for 1st non−zero byte — 12

'NULS' = number leading null bytes — 13

Determine current pitch — 14

'CHAR−WIDTH' = number of graphics bytes for 1 char position — 15

'LEAD−SPACE' = NULS / CHAR−WIDTH — 16

Print 'LEAD−SPACE' count of text spaces — 17

'NULS−USED' = LEAD−SPACE $*$ CHAR−WIDTH — 18

Set beginning pointer = original + NULS−USED — 19

Set graphics data count = original − NULS−USED — 20

Transmit the buffer — 21

End

# F I G. 5